# EUROPEAN PATENT APPLICATION

(11) **EP 2 048 794 A1**
(43) Date of publication of application: **15.04.2009**
(21) Application number: 07019650.6
(22) Date of filing: 08.10.2007
(51) Int. Cl.: H04B 3/32, H04L 27/26, H04M 3/30

(54) **Method and device for data processing and communication system comprising such device**

(71) Applicant: Nokia Siemens Networks Oy, 02610 Espoo (FI)
(72) Inventor: Ahrndt, Thomas, Dr., 85521 Ottobrunn (DE)
(74) Representative: Bruglachner, Thomas E.

(57) **Abstract**

A method and a device for data processing are provided, wherein a first network element is connected via several lines to several second network elements, the method comprising the steps of (i) a first joint processing is performed at the first network element; and (ii) a second joint processing is performed at at least one of the second network elements.

## Description

The invention relates to a method and to a device for data processing and to a communication system comprising such a device.

DSL (Digital Subscriber Line) is a family of technologies that provide digital data transmission over the wires of a telephone access network. DSL technologies are often referred to as "xDSL", wherein "x" stands for various DSL variants.

Asymmetric Digital Subscriber Line (ADSL, ITU-T G.992.1) is a form of DSL, a data communications technology that enables faster data transmission over copper telephone lines than a conventional voice band modem can provide. Such fast transmission is achieved by utilizing frequencies that are normally not used by a voice telephone call, in particular, frequencies higher than normal human hearing.

ADSL2 (ITU-T G.992.3) and ADSL2plus (ITU-T G.992.5) are variants of ADSL, both providing better performance compared to basic ADSL.

VDSL (Very high speed DSL, ITU-T G.993.1) as well as VDSL2 (Very high speed DSL 2, ITU-T G.993.2) are xDSL technologies providing even faster data transmission over a single twisted pair of wires. This is mainly achieved by using a larger frequency range.

xDSL technologies exploit the existing infrastructure of copper wires that were originally designed for plain old telephone service (POTS). They can be deployed from central offices (COs), from, e.g., fiber-fed cabinets preferably located near the customer premises, or within buildings.

Transmission of signals across a copper access network may cause crosstalk problems.

Copper access networks often are designed such that they utilize cables containing a multitude of wires or wire pairs. Wires or wire pairs are often organized in binders within cables.

Wires or wire pairs are running in parallel with other wires or wire pairs over significant distances.

Crosstalk occurs when wires are coupled, in particular between wire pairs (twisted pair lines) of the same or a nearby binder within the same or an adjacent cable. Hence, data signals from one or more twisted pair lines can be superimposed on and contaminate a data signal of a different twisted pair line. The crosstalk comprises a near-end crosstalk (NEXT) and a far-end crosstalk (FEXT).

Based on such crosstalk, data signals transmitted over twisted-pair lines can be considerably degraded by the crosstalk interference generated on one or more adjacent twisted-pair phone lines in the same and/or a nearby cable or binder. With an increasing transmission speed, this problem even deteriorates. Crosstalk may significantly limit a maximum data rate to be transmitted via a single line.

A multiple-input-multiple-output system (hereinafter referred to as MIMO system) is of significant importance in modern communication technology. Such MIMO system allows to model crosstalk interference of a telecommunication system.

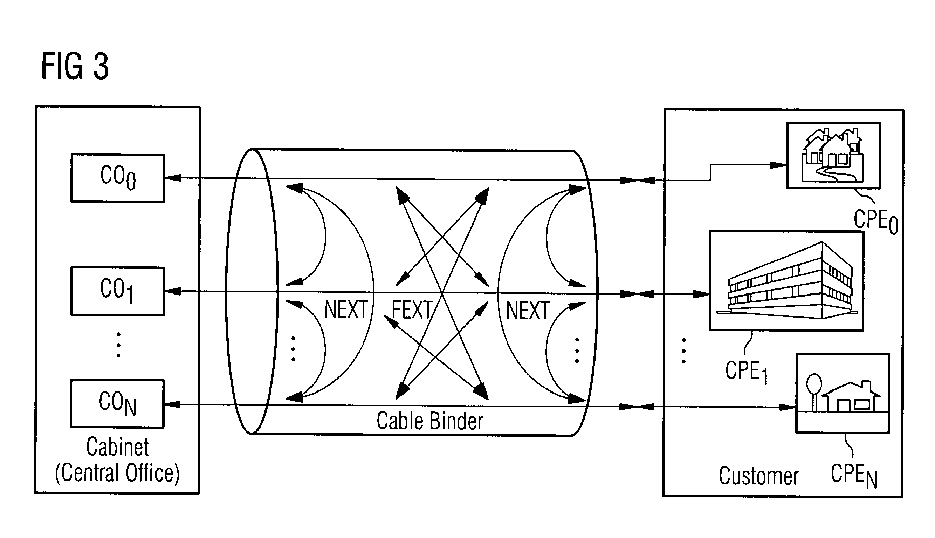

**Fig.3** illustrates in particular crosstalk comprising NEXT and FEXT components between a Central Office (CO) comprising several transceivers CO₀ to CO_{N} and several Customer Premises Equipment transceivers CPE₀ to CPE_{N} located at different customer locations. CO and CPE transceivers may be connected via a common Cable Binder.

An impact of NEXT can be reduced by utilizing frequency-division duplex between upstream and downstream direction. Current VDSL2 deployments are (indirectly) FEXT limited due to the choice of a relatively conservative Power Spectral Density (PSD) mask, thereby allowing to reduce NEXT in conjunction with a strong loop attenuation at frequencies beyond 1 MHz.

Downstream precompensation (achieved in particular by precoding) or upstream cancellation may allow utilization of more aggressive PSD masks (in particular with full binder deployments); at least, improvements regarding the reach and/or the data rate can be achieved by reducing crosstalk at existing PSD levels.

Furthermore, idle data sent induce crosstalk interference and hence disturb user data sent via other lines of, e.g., a multi-core cable. As there are typically 50 lines within one multi-core cable, such crosstalk could significantly impair the overall performance of the transmitting capability.

Processing of a pre-coding matrix at the central office (CO) results in processing a 50*50 matrix thereby consuming a significant region on a chip and leading to a high power consumption.

In order to support higher order modulation to increase data rate for the individual user and/or the total data rate transmitted from the central office to customer premises equipments (CPEs) inter-line crosstalk is a limiting factor for the achievable signal to interference and noise ratio (SINR) at the CPEs.

The main component of the inter-line crosstalk is determined by the coupling coefficients of the lines involved in the transmission system. The inter-line crosstalk is generally slowly varying over time and can be considered almost constant over a certain time period.

According to [1] achievable rates of a communication channel remain unchanged if the receiver observes the transmitted signal in the presence of additive interference, provided that the transmitter knows the interference non-causally.

It is known that for real time implementation on a dedicated hardware, sub-optimal schemes like Tomlinson-Harashima precoding for decentralized receivers (see [2],[4]) or joint transmission (see [3],[5]) can be used alternatively.

Hence, data transmission rates via bundled wires (bonded wires or cable binders) can be significantly improved by reducing crosstalk and/or interference. Hence, joint processing is provided in a centralized component, e.g., the Central Office, performing in particular downstream precompensation (precoding) and/or upstream cancellation.

The **problem** to be solved is to allow a further reduction of noise, in particular crosstalk and/or interference and thereby in particular enable higher data transmission rates.

This problem is solved according to the features of the independent claims. Further embodiments result from the depending claims.

In order to overcome this problem, a method for data processing is provided, wherein a first network element is connected via several lines to several second network elements, the method comprising the steps:
- a first joint processing is performed at the first network element; and
- a second joint processing is performed at at least one of the second network elements.

Advantageously, joint processing can be provided at both sides, i.e., at the first network element and at one second network element (or at several second network elements).

It is to be noted that the first network element may comprise several transceivers, wherein each transceiver is connected to a transceiver that may be located at one second network element. In particular, several transceivers may be located at one second network element and may be hence adjacent to one another. In addition or as an alternative, several second network elements may be located adjacent to one another, wherein each network element may comprise one transceiver or several transceivers.

The transceivers at the first network element and the at least one transceiver located at the at least one second network element may exchange information via a line that is in particular arranged as a twin-wire line, e.g., a twin-copper-wire. Several lines may be gathered together in a cable binder.

According to the approach provided herewith, several lines may be connected adjacent to one another at the at least one second network element thereby allowing the at least one second network element (or several such second network elements) to also provide joint processing, in particular steps or means to achieve precompensation and/or cancellation in order to reduce noise (interference and/or crosstalk) and hence improve the overall data rate.

Therefore, joint processing can be performed at the first network element and at the side of the at least one second network element. Advantageously, a feedback-channel from the at least one second network element to the first network element may convey information to further reduce noise or interference and hence improve the overall data rates to be processed on adjacent lines. In addition, the feedback-channel can be omitted, because upstream precompensation can be conducted.

In an embodiment, at least two second network elements are adjacent to one another.

Hence, at least two second network elements may share one or more bonded wires.

In another embodiment, the first joint processing and/or the second joint processing comprises at least one of the following steps:
- a precompensation;
- a cancellation.

Both, precompensation and/or cancellation may be at least partially achieved. Precompensation in particular tries to at least partially adopt the channel characteristics by modifying signals to be transmitted in a way that the channel distorts the modified signals such that they arrive at the receiver as much as possible in their original (correct) shape.

Cancellation may comprise steps to reduce noise stemming from, e.g., crosstalk and/or interference.

In a further embodiment, the first joint processing and or the second joint processing is used to reduce and/or eliminate interference and/or crosstalk.

In a next embodiment, a feedback channel is provided from the at least one second network element to the first network element.

This feedback channel allows to convey information to the first network element as how the signals sent arrive at the receiving side. Such information may be utilized for precompensation purposes.

It is to be noted that at least one feedback channel can also be provided from the first network element towards the at least one second network element in particular for precompensation purposes at the at least one second network element.

It is also an embodiment that the feedback channels provides measurement data based on the second joint processing at the at least one second network elements.

Pursuant to another embodiment, each line comprises a twin-wire line.

According to an embodiment, at least two twin wires are bonded at the at least one second network element.

According to another embodiment the first network element is or is associated with a Central Office and/or a Digital Subscriber Line Access Multiplexer.

In yet another embodiment, the several lines are Digital Subscriber Lines, in particular Asymmetric Digital Subscriber Lines according to ADSL2/2plus standards or Very high speed Digital Subscriber Lines according to VDSL/VDSL2 standards.

According to a next embodiment, the second network element is or is associated with a Customer Premises Equipment (CPE).

Pursuant to yet an embodiment, noise comprises at least one of the following components:
- crosstalk, in particular near-end cross talk and/or far-end crosstalk;
- interference.

The problem stated above is also solved by a device for data processing comprising a processor unit that is equipped / arranged such that the method as described herein is executable on said processor unit.

The problem stated supra is also solved by a communication system comprising the device as described herein.

Embodiments of the invention are shown and illustrated in the following figures:
- Fig.1: shows a first network element (CO) comprising several transceivers, each of those being connected to a transceiver or port at a Customer Premises Equipment via a line;
- Fig.2: shows a scenario of downstream and/or upstream precompensation and/or cancellation between a Central Office CO and several Customer Premises Equipments CPEs;
- Fig.3: illustrates crosstalk comprising NEXT and FEXT components between a central office (CO) and several Customer Premises Equipments.

Upon determination of the relationships or effects of adjacent lines, coefficients may be calculated in a joint processing block in order to combine DSL ports of a line card to achieve downstream precompensation and/or upstream cancellation of noise, in particular of interference and/or crosstalk. Hence, an overall data rate through a cable binder, in particular via several lines, may be significantly improved.

This result can be further improved by bonding of at least two adjacent second network elements, in particular at least two Customer Premises Equipments (CPEs). It is noted that such bonding may also be applicable for one CPE that comprises at least two transceivers. In such case, at least two lines arriving at this particular CPE, both lines comprising twin-wire lines and being adjacent to one another, may inflict some noise (interference and/or crosstalk) that may be subject to (a second) joint processing at the side of the at least one CPE.

Hence, it is possible to utilizes precompensation and/or cancellation procedures or steps at the first network element, e.g., a Central Office (CO) and/or at the at least one second network element, e.g., at the CPE.

This approach efficiently allows obtaining a more exact representation regarding a geometry of the cable binder and, as a result, the coefficient of a cancellation and/or precoding matrix may be determined at a higher accuracy.

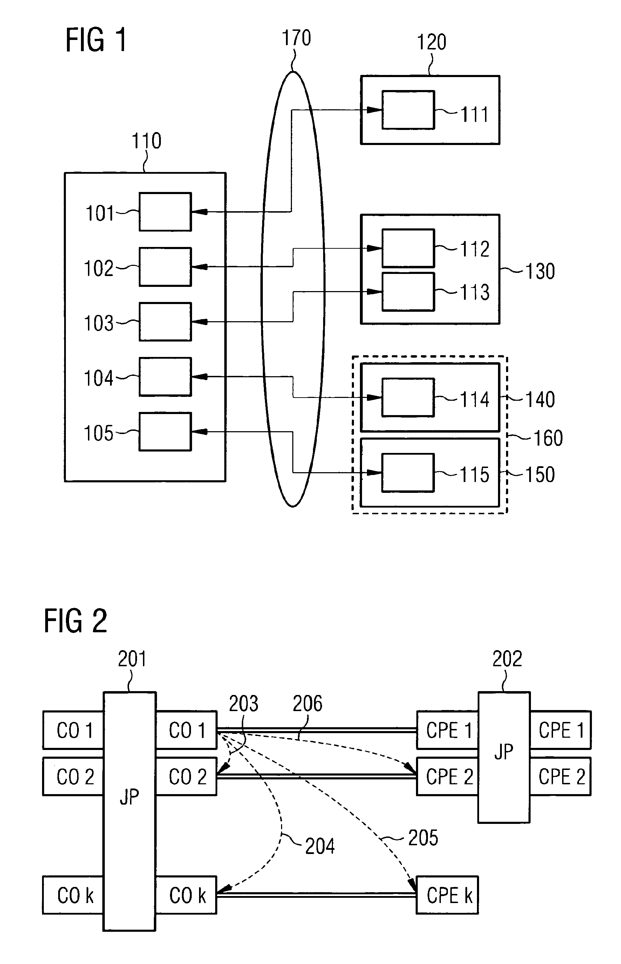

**Fig.1** shows a first network element, e.g., a Central Office 110 comprising several transceivers or ports 101 to 105. Each transceiver or port 101 to 105 is connected to a transceiver or port 111 to 115 at a Customer Premises Equipment 120 to 150 via a line that comprises a twin-wire line. According to this example, the lines shown are combined in one cable binder 170.

In particular, the transceiver or port 101 is connected to the transceiver or port 111 of CPE 120, the transceiver or port 102 is connected to the transceiver or port 112 of CPE 130, the transceiver or port 103 is connected to the transceiver or port 113 of CPE 130, the transceiver or port 104 is connected to the transceiver or port 114 of CPE 140 and the transceiver or port 105 is connected to the transceiver or port 115 of CPE 150. The CPE 140 and the CPE 150 are adjacent to one another as depicted by a dashed line 160.

According to the example shown in Fig.1, a first joint processing is conducted at the Central Office 110 and a second joint processing is conducted, e.g., at the CPE 130 for its transceivers or ports 112 and 113 or at the CPE 140 and the CPE 150 for their transceivers or ports 114 and 115.

**Fig.2** shows a scenario of downstream and/or upstream precompensation and/or cancellation between a Central Office CO and several Customer Premises Equipments CPEs.

A first joint processing 201 is performed at the Central Office comprising several ports CO 1, CO 2, .., CO k. The port CO 1 is connected via a twin-wire line to a port CPE 1 and the port CO 2 is connected via a twin-wire line to a port CPE 2, wherein both ports CPE 1 and CPE 2 may be either located at adjacent CPEs or are two ports of one CPE. The proximity of the ports CPE 1 and CPE 2 to one another allows a second joint processing 202 to be conducted.

Hence, the first joint processing 201 and the second joint processing 202 can be utilized for precompensation and/or cancellation of noise, in particular of interference and/or crosstalk, either in upstream and/or in downstream direction.

Fig.2 also depicts near-end crosstalk (NEXT) by dashed arrows 203 and 204 as well as far-end crosstalk (FEXT) by dashed arrows 205 and 206.

### References:

[1] M. Costa, "Writing dirty paper", IEEE Transactions on Information Theory, vol.29, pp. 439-441, May 1983.
[2] R.F.H. Fischer, C. Windpassinger, A. Lampe, J.B. Huber, Space-Time Transmission using Tomlinson-Harashima Precoding, In 4th Intern. ITG Conf. on Source and Channel Coding, pp.139-147, Berlin, Jan. 2002.
[3] P.W. Baier, M. Meurer, T. Weber, and H. Tröger, Joint Transmission (JT, an alternative rationale for the downlink of Time Division CDMA using multi-element transmit antennas), Proc. IEEE ISSSTA, NJIT, New Jersey, U.S.A., pages 1-5, 6-8th Sept. 2000.
[4] T. Haustein, M. Schubert, and H. Boche, On Power Reduction Strategies for the Multi-User Downlink with Decentralized Receivers, In IEEE VTC-Spring, Korea, April 2003.
[5] T. Haustein, A. Forck, H. Gäbler, C.v. Helmolt, V. Jungnickel, and U. Krueger, Implementation of Adaptive Channel Inversion in a Real-Time MIMO System. In IEEE PIMRC, Barcelona, Spain, Sept. 2004.

## Claims

1. A method for data processing, wherein a first network element is connected via several lines to several second network elements, comprising the steps:
- a first joint processing is performed at the first network element; and
- a second joint processing is performed at at least one of the second network elements.

2. The method according to claim 1, wherein at least two second network elements are adjacent to one another.

3. The method according to any of the preceding claims, wherein the first joint processing and/or the second joint processing comprises at least one of the following steps:
- a precompensation;
- a cancellation.

4. The method according to any of the preceding claims, wherein the first joint processing and or the second joint processing is used to reduce and/or eliminate interference and/or crosstalk.

5. The method according to any of the preceding claims, wherein a feedback channel is provided from the at least one second network elements to the first network element.

6. The method according to claim 5, wherein the feedback channels provides measurement data based on the second joint processing at the at least one second network elements.

7. The method according to any of the preceding claims, wherein each line comprises a twin-wire line.

8. The method according to any of the preceding claims, wherein at least two twin wires are bonded at the at least one second network element.

9. The method according to any of the preceding claims, wherein the first network element is or is associated with a Central Office and/or a Digital Subscriber Line Access Multiplexer.

10. The method according to any of the preceding claims, wherein the several lines are Digital Subscriber Lines, in particular Asymmetric Digital Subscriber Lines according to ADSL2/2plus standards.

11. The method according to any of the preceding claims, wherein the second network element is or is associated with a Customer Premises Equipment.

12. The method according to any of the preceding claims, wherein noise comprises at least one of the following components:
- crosstalk, in particular near-end cross talk and/or far-end crosstalk;
- interference.

13. A device for data processing comprising a processor unit that is arranged such that the method according of any of the preceding claims is executable on said processor unit.

14. Communication system comprising the device according to claim 13.
